# EUROPEAN PATENT APPLICATION

(11) **EP 3 831 637 A1**
(43) Date of publication of application: **09.06.2021**
(21) Application number: 19275144.4
(22) Date of filing: 06.12.2019
(51) Int. Cl.: B60K 37/02, B60Q 3/10, F21V 8/00, G02B 19/00, G02B 27/01, F21V 7/00

(54) **LIGHT SOURCE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A dynamic light source for a display is disclosed. The dynamic light source comprises a first light source located inside a first device; and a second light source. The first device is configured to allow light from the first light source to exit the first device in a first cone of angles and to reflect light incident outside the cone of angles back towards the first light source. The first device is configured such that injected light from the second light source is reflected by the first light source in a second cone of angles substantially coincident with the first cone of angles.

## Description

### BACKGROUND

For some applications it is desirable to have a light source that has a high range of output intensities, for example a light source for a head up display (HUD) or head mounted display (HMD).

### BRIEF DESCRIPTION OF DRAWINGS

Figures 1A and 1B illustrate a conventional light source.
Figure 2 illustrates a light source in accordance with some examples.
Figure 3 illustrates a light source comprising a fibre optic cable in accordance with some examples.

### DETAILED DESCRIPTION

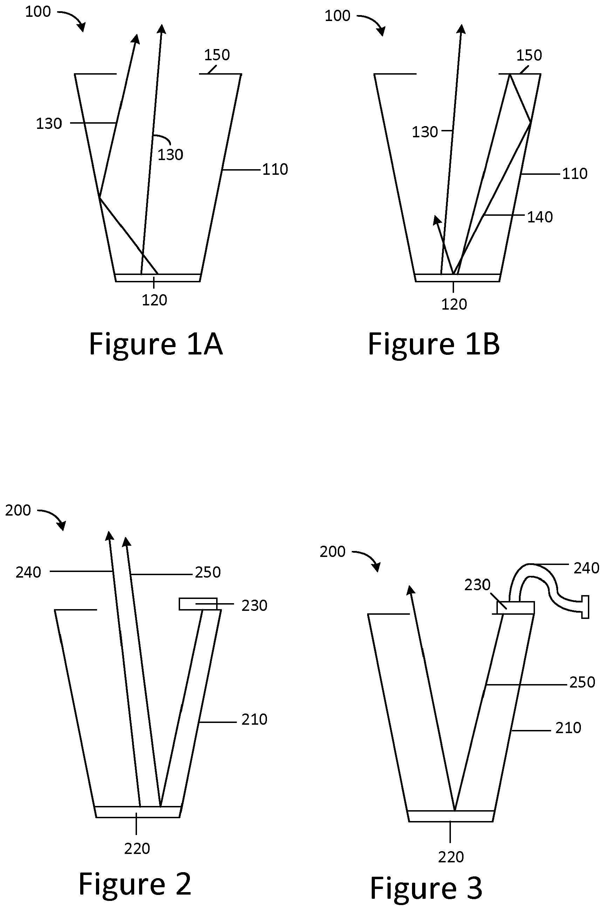

Figure 1A illustrates a conventional light source 100. Conventional light source 100 comprises a light source 120 located inside a light pipe 110 comprising a reflective aperture 150. Light pipe 110 and light source 120 are configured to allow output light 130 to exit light pipe 110 in a cone of angles, and to prevent light exiting the light pipe outside of the cone of angles. The light may be prevented from exiting outside of the cone of angles by the presence of the reflective aperture 150. This is described with relation to Figure 1B.

The reflective aperture 150 reflects incident light 140 that is incident onto aperture 140 such that the light is reflected back towards the light source 120, increasing the amount of useful power output from the conventional light source 100 by providing light recycling. This may a direct reflection from the reflective aperture 150 or indirect, via the sides of the light pipe 110.

However, some applications use very high dynamic ranges of optical power and therefore high current ranges are required. In some examples a range of micro Amps to ∼1 Amp (a dynamic range of approximately 1:10⁶). This may require very complicated and large electronics. This may be particularly problematic when the conventional light source 100 is used on a HMD, as this could make the helmet bulky and heavy.

Figure 2 illustrates a dynamic light source 200 in accordance with some examples. Dynamic light source 200 comprises a first device 210, a first light source 220 and a second light source 230. The first light source 220 is located inside first device 210 and the first device 210 is configured to allow light from the first light source 220 to exit the first device 210 in a first cone of angles 240. The first device 210 is further configured to reflect light incident outside the first cone of angles 240 back towards the first light source 220, similar to the conventional light source 100 described in relation to Figure 1.

Second light source 230 emits light towards the first light source 220, which is then reflected in a second cone of angles 250 substantially coincident with the first cone of angles. At least due to the fact that light emitted from the second light source 230 is reflected from the first light source 220, the output power of the second cone of angles 250 may be attenuated compared to the output power directly from the second light source 230. This may allow the dynamic light source 200 to have a dynamic range of power that is greater for the same current range than the dynamic range that would be allowed if the second light source 230 was not used. This is because the second light source 230 may be used to obtain the low power outputs that would conventionally require the first light source 220 to be driven with small electrical currents.

In some examples the first light source 220 and the second light source 230 may be driven with substantially the same range of input currents, but may result in a different range of output powers from the light source 100. In some examples the output powers may differ by approximately an order of magnitude. In some examples the first light source 220 may be used to output light from the light source 200 in the range of ∼0.01 A to ∼1 A and the second light source may output light from the light source 200 in the range of ∼1 micro A to ∼0.01 A.

In some examples the first device 210 comprises a homogenising light pipe. In some examples the first device 210 comprises a tapered light pipe.

In some examples the first device 210 comprises an aperture to allow light to be output in the cone of angles. In some examples the second light source 230 is located substantially adjacent to the aperture.

In some examples the first light source 220 comprises at least one light emitting diode (LED). In some examples the first light source comprises a plurality of LEDs mounted on a die.

Figure 3 illustrates the dynamic light source 200 according to some examples, substantially similar to the description of Figure 2, however the second light source 230 comprises a fibre optic cable 240. The fibre optic cable 240 may be used to couple the light from an external light source into the first device 210. This may allow a conventional light source 100, similar to that described with relation to Figure 1 to be adapted to have the same output power range with a smaller electrical current range without needing to add a second LED to the light source 100. The use of the fibre optic cable may also allow a smaller and simpler device.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term 'comprising' does not exclude the presence of other elements or steps.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality. In the claims, the term 'comprising' or "including" does not exclude the presence of other elements.

## Claims

1. A dynamic light source for a display, the light source comprising:
a first light source located inside a first device; a second light source;
wherein the first device is configured to allow light from the first light source to exit the first device in a first cone of angles and to reflect light incident outside the cone of angles back towards the first light source;
wherein the first device is configured such that injected light from the second light source is reflected by the first light source in a second cone of angles substantially coincident with the first cone of angles.

2. The dynamic light source according to claim 1, wherein the first device comprises a homogenising light pipe.

3. The dynamic light source according to any of claims 1 or 2, wherein first device comprises a tapered light pipe.

4. The dynamic light source according to any of claims 1-3, wherein the first device comprises an aperture to allow light to be output in the cone of angles.

5. The dynamic light source according to claim 4, wherein the second light source is located substantially adjacent to the aperture.

6. The dynamic light source according to any of claims 1-5, wherein the second light source comprises a fibre optic cable.

7. The dynamic light source according to claim 6, wherein the fibre optic cable is coupled to an external light source.

8. The dynamic light source according to any of claims 1-7, wherein the first light source comprises at least one light emitting diode

9. The dynamic light source according to any of claims 1-8, wherein the first light source comprises a die comprising a plurality of light emitting diodes

10. The dynamic light source according to any of claims 1-9, wherein the first light source and second light source operate using substantially the same range of drive currents.
